(19) Europäisches Patentamt
European Patent Office
Office européen des brevets

(11) EP 4 708 430 A1

(12) **EUROPEAN PATENT APPLICATION**

(43) Date of publication:
**11.03.2026 Bulletin 2026/11**

(21) Application number: **25185121.8**

(22) Date of filing: **25.06.2025**

(51) International Patent Classification (IPC):
***H01M 10/0525*** *(2010.01)* ***H01M 10/0567*** *(2010.01)*
***H01M 10/0569*** *(2010.01)*

(52) Cooperative Patent Classification (CPC):
**H01M 10/0525; H01M 4/364; H01M 4/386; H01M 4/525; H01M 4/587; H01M 10/0567; H01M 10/0569;** H01M 2300/004

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **26.07.2024 KR 20240099572**

(71) Applicant: **SAMSUNG SDI CO., LTD.**
**Yongin-si, Gyeonggi-do 17084 (KR)**

(72) Inventors:
- **Yang, Yeji**
  **17084 Yongin-si, Gyeonggi-do (KR)**
- **Kim, Sanghoon**
  **17084 Yongin-si, Gyeonggi-do (KR)**
- **Choi, Hyunbong**
  **17084 Yongin-si, Gyeonggi-do (KR)**
- **Park, Sangwoo**
  **17084 Yongin-si, Gyeonggi-do (KR)**
- **Park, Hongryeol**
  **17084 Yongin-si, Gyeonggi-do (KR)**
- **Ji, Woojung**
  **17084 Yongin-si, Gyeonggi-do (KR)**
- **Kim, Sohee**
  **17084 Yongin-si, Gyeonggi-do (KR)**
- **Shin, Youngkyeong**
  **17084 Yongin-si, Gyeonggi-do (KR)**
- **Jun, Dasol**
  **17084 Yongin-si, Gyeonggi-do (KR)**

(74) Representative: **Gulde & Partner**
**Patent- und Rechtsanwaltskanzlei mbB**
**Berliner Freiheit 2**
**10785 Berlin (DE)**

# (54) ELECTROLYTE FOR RECHARGEABLE LITHIUM BATTERY AND RECHARGEABLE LITHIUM BATTERY INCLUDING THE SAME

(57) An electrolyte for a rechargeable lithium battery and a rechargeable lithium battery including the electrolyte are disclosed. The electrolyte may include a non-aqueous (e.g., water-insoluble) organic solvent, a lithium salt, a first additive represented by Chemical Formula 1, and a second additive represented by Chemical Formula 2. A more detailed description of the first additive and the second additive is provided in the present disclosure.

EP 4 708 430 A1

## Description

## BACKGROUND

### 1. Field

One or more embodiments of the present disclosure relate to an electrolyte for a rechargeable lithium battery and a rechargeable lithium battery including the electrolyte.

### 2. Description of the Related Art

Recently, with the rapid proliferation or spread of electronic devices that use batteries (such as mobile phones, laptop computers, and/or the like) and/or electric vehicles, the demand for rechargeable batteries with high energy density and high capacity (e.g., electrical capacity) is rapidly increasing. Therefore, research and development have been conducted to improve or enhance the performance of rechargeable lithium batteries.

A rechargeable lithium battery includes a positive electrode, a negative electrode, and an electrolyte. The positive electrode and the negative electrode include an active material in which intercalation and deintercalation may occur. The rechargeable lithium battery generates electrical energy caused by oxidation and reduction reactions if (e.g., when) lithium ions are intercalated and deintercalated.

## SUMMARY

The invention is defined by the appended claims. The description that follows is subjected to this limitation. Any disclosure lying outside the scope of said claims is only intended for illustrative as well as comparative purposes.

One or more aspects of embodiments of the present disclosure are directed toward an electrolyte for a rechargeable lithium battery with (having) enhanced (excellent or suitable) room-temperature cycle-life characteristics.

One or more aspects of embodiments of the present disclosure are directed toward an electrolyte for a rechargeable lithium battery with (having) enhanced (excellent or suitable) suppression of gas generation (e.g., reduction of a degree or occurrence of gas generation) and improved (enhanced) suppression of resistance increase (e.g., reduction of a degree or occurrence of resistance increase).

One or more aspects of embodiments of the present disclosure are directed toward a rechargeable lithium battery including the electrolyte as described in one or more embodiments.

Additional aspects of embodiments will be set forth in part in the description which follows and, in part, will be apparent from the description or may be learned by practice of the presented embodiments of the disclosure.

A first aspect of the present disclosure relates to an electrolyte for a rechargeable lithium battery, which includes: a non-aqueous (e.g., water-insoluble) organic solvent; a lithium salt; a first additive represented by Chemical Formula 1; and a second additive represented by Chemical Formula 2.

Chemical Formula 1

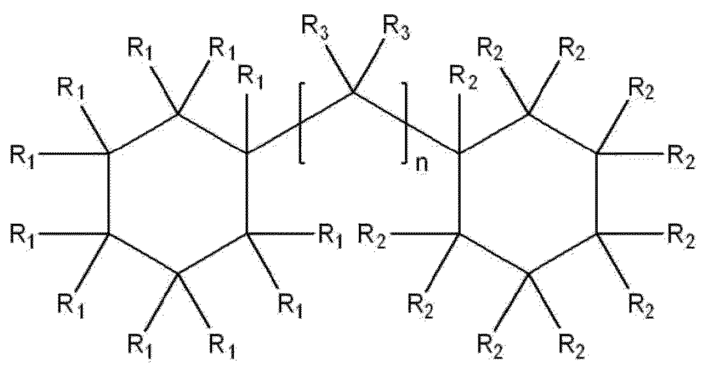

In Chemical Formula 1,

$R_1$ is each independently identical or different and is each independently hydrogen, halogen, a C1 to C10 alkyl group, or an isocyanate group, wherein at least one of $R_1$ is an isocyanate group,

$R_2$ is each independently identical or different and is each independently hydrogen, halogen, a C1 to C10 alkyl group,

or an isocyanate group, wherein at least one of $R_2$ is an isocyanate group,
$R_3$ is each independently identical or different and is each independently be hydrogen or a cyclohexyl isocyanate residue, and
n is an integer of 1 to 10.

Chemical Formula 2

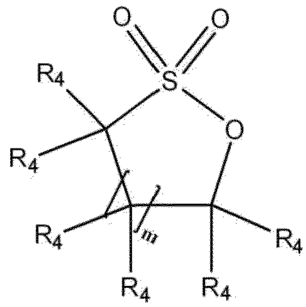

In Chemical Formula 2,
$R_4$ is each independently identical or different and is each independently hydrogen, halogen, a substituted or unsubstituted C1 to C20 alkyl group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C3 to C20 cycloalkenyl group, a substituted or unsubstituted C3 to C20 cycloalkynyl group, a substituted or unsubstituted C6 to C30 aryl group, or a substituted or unsubstituted C2 to C30 heterocyclic group, and m may is an integer of 1 to 4.

A second aspect of the present disclosure relates to a rechargeable lithium battery, which includes: a positive electrode that includes a positive electrode active material; a negative electrode that includes a negative electrode active material; and the aforementioned electrolyte for the rechargeable lithium battery.

## BRIEF DESCRIPTION OF DRAWINGS

The accompanying drawings, together with the specification, illustrate embodiments of the subject matter of the present disclosure, and, together with the description, serve to explain principles of embodiments of the subject matter of the present disclosure.

FIG. 1 is a simplified conceptual diagram illustrating a rechargeable lithium battery according to one or more embodiments of the present disclosure.
FIGS. 2-5 are diagrams illustrating a rechargeable lithium battery according to one or more embodiments of the present disclosure.

## DETAILED DESCRIPTION

In order to sufficiently understand the aspects and features of the present disclosure, the subject matter of the present disclosure will be described below in more detail with reference to the accompanying drawings. It should be noted, however, that the present disclosure is not limited to the disclosed embodiments and may be implemented in one or more suitable forms. Rather, these embodiments are provided as examples, by referring to the drawings, to explain the aspects and features of the present disclosure to those skilled in the art.
In the present disclosure, it will be understood that, if (e.g., when) an element is referred to as being "on" another element, the element may be directly on the other element or intervening elements may be present therebetween. In contrast, if (e.g., when) an element is referred to as being "directly on" another element, no intervening elements are present therebetween.
In the drawings, thicknesses of one or more components may be exaggerated to effectively illustrate the technical contents. Like reference numerals refer to like elements throughout, and duplicative descriptions thereof may not be provided in the present disclosure.
Unless otherwise noted in the present disclosure, the expression of singular form may include the expression of plural form. The terms "includes/has" and/or "including/having" used in the present disclosure do not exclude the presence or addition of one or more other components.

As used herein, the term "combination thereof" may refer to a mixture, a stack, a composite, a copolymer, an alloy, a blend, a reaction product, and/or the like of constituents.

Unless otherwise defined in the present disclosure, a particle diameter may be an average particle diameter. Also, a particle diameter may refer to an average particle diameter ($D_{50}$) where a cumulative volume is about 50 volume % in a particle size distribution. The average particle diameter ($D_{50}$) may be measured by any suitable methods that are generally available to or generally used by to those skilled in the art, for example, by a particle size analyzer and/or may also be measured by utilizing a transmission electron microscope (TEM) image and/or a scanning electron microscope (SEM) image. As used herein, if (e.g., when) a definition is not otherwise provided, the average particle diameter refers to a diameter ($D_{50}$) of particles having a cumulative volume of 50 volume% in the particle size distribution that is obtained by measuring the size (e.g., diameter or major axis length) of about 20 particles at random in a scanning electron microscope (SEM) image. In one or more embodiments, a dynamic light-scattering (DLS) measurement device may be used to perform a data analysis, the number of particles is counted for each particle size range, and then from this data, an average particle diameter ($D_{50}$) value may be obtained through a calculation. Also, a laser scattering method may be utilized to measure the average particle diameter ($D_{50}$). In the laser scattering method, a target particle may be distributed in a dispersion solvent, introduced into a laser scattering particle measurement device (e.g., MT3000 commercially available from Microtrac, Inc), irradiated with ultrasonic waves of 28 kHz at a power of 60 W, and then an average particle diameter ($D_{50}$) is calculated in the 50% standard of particle diameter distribution in the measurement device. In one or more embodiments, if (e.g., when) particles are spherical (e.g., substantially spherical), "diameter" or "size" refers to a particle diameter, and if (e.g., when) the particles are non-spherical, the "diameter" or "size" refers to a major axis length.

In the present disclosure, unless otherwise separately defined, the term "substituted" refers to that at least one hydrogen of a substituent or a compound is substituted by deuterium, a halogen group, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, C1 to C20 alkoxy group, a C1 to C10 fluoroalkyl group, or a cyano group.

In one or more embodiments, the term "substituted" may refer to that at least one hydrogen of a substituent or a compound is substituted by deuterium, a halogen group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. For example, the term "substituted" may refer to that at least one hydrogen of a substituent or a compound is substituted by deuterium, a halogen group, a C1 to C20 alkyl group, a C6 to C30 aryl group, a C1 to C10 fluoroalkyl group, or a cyano group.

In one or more embodiments, the term "substituted" may refer to that at least one hydrogen of a substituent or a compound is substituted by deuterium, a halogen group, a C1 to C5 alkyl group, a C6 to C18 aryl group, a C1 to C5 fluoroalkyl group, or a cyano group. For example, the term "substituted" may refer to that at least one hydrogen of a substituent or a compound is substituted by deuterium, a cyano group, a halogen group, a methyl group, an ethyl group, a propyl group, a butyl group, a phenyl group, a biphenyl group, a terphenyl group, a trifluoromethyl group, or a naphthyl group.

FIG. 1 is a simplified conceptual diagram illustrating a rechargeable lithium battery according to one or more embodiments of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced and/or apart (e.g., spaced apart or separated) from each other across the separator 30. The separator 30 may be between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in/with the electrolyte ELL.

The electrolyte ELL may be a medium by which lithium ions are transferred between the positive electrode 10 and the negative electrode 20. In the electrolyte ELL, the lithium ions may move through the separator 30 toward one of the positive electrode 10 and the negative electrode 20.

### Positive Electrode 10

The positive electrode 10 for a rechargeable lithium battery may include a current collector COL1 and a positive electrode active material layer AML1 on the current collector COL1. The positive electrode active material layer AML1 may include a positive electrode active material and may further include a binder and/or a conductive (e.g., electrically conductive) material (e.g., an electron conductor).

For example, the positive electrode 10 may further include an additive that may act or serve as a sacrificial positive electrode.

An amount of the positive electrode active material may be about 90 wt% to about 99.5 wt% relative to 100 wt% (e.g., based on 100 wt% of a total amount) of the positive electrode active material layer AML1. An amount of each of the

binder and the conductive (e.g., electrically conductive) material (e.g., an electron conductor) may be about 0.5 wt% to about 5 wt% relative to 100 wt% (e.g., based on 100 wt% of a total amount) of the positive electrode active material layer AML1.

The binder may act or serve to improve or enhance attachment of positive electrode active material particles to each other and also to improve and enhance attachment of the positive electrode active material to the current collector COL1. The binder may include, for example, polyvinyl alcohol, carboxymethyl cellulose, hydroxypropyl cellulose, diacetyl cellulose, polyvinylchloride, carboxylated polyvinylchloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and/or nylon, but embodiments of the present disclosure are not limited thereto.

The conductive (e.g., electrically conductive) material (e.g., an electron conductor) may be used to provide an electrode with conductivity (e.g., electrical conductivity), and any suitable conductive (e.g., electrically conductive) material that does not cause a chemical change (e.g., an undesirable chemical change) in a rechargeable lithium battery may be used as the conductive (e.g., electrically conductive) material. The conductive (e.g., electrically conductive) material (e.g., an electron conductor) may include, for example, a carbon-based material, such as natural graphite, artificial graphite, carbon black, acetylene black, Ketjen black, carbon fiber, carbon nano-fiber, and/or carbon nano-tube; a metal powder and/or a metal fiber containing one or more selected from among copper, nickel, aluminum, and silver; a conductive (e.g., electrically conductive) polymer, such as polyphenylene and/or a polyphenylene derivative; and/or a (e.g., any suitable) mixture thereof.

Aluminum (Al) may be used as the current collector COL1, but embodiments of the present disclosure are not limited thereto.

**Positive Electrode Active Material**

The positive electrode active material in the positive electrode active material layer AML1 may include a compound (e.g., a lithiated intercalation compound) that may reversibly intercalate and deintercalate lithium. For example, the positive electrode active material may include at least one kind or type of a composite oxide including lithium and a metal that is selected from among cobalt, manganese, nickel, and/or a (e.g., any suitable) combination thereof.

The composite oxide may include a lithium transition metal composite oxide, for example, a lithium-nickel-based oxide, a lithium-cobalt-based oxide, a lithium-manganese-based oxide, lithium-iron-phosphate-based compounds, a cobalt-free nickel-manganese-based oxide, and/or a (e.g., any suitable) combination thereof.

For example, the positive electrode active material may include a compound expressed by one of chemical formulae. $Li_aA_{1-b}X_bO_{2-c}D_c$ (where $0.90 \leq a \leq 1.8$, $0 \leq b \leq 0.5$, and $0 \leq c \leq 0.05$); $Li_aMn_{2-b}X_bO_{4-c}D_c$ (where $0.90 \leq a \leq 1.8$, $0 \leq b \leq 0.5$, and $0 \leq c \leq 0.05$); $Li_aNi_{1-b-c}Co_bX_cO_{2-\alpha}D_\alpha$ (where $0.90 \leq a \leq 1.8$, $0 \leq b \leq 0.5$, $0 \leq c \leq 0.5$, and $0 < \alpha < 2$); $Li_aNi_{1-b-c}Mn_bX_cO_{2-\alpha}D_\alpha$ (where $0.90 \leq a \leq 1.8$, $0 \leq b \leq 0.5$, $0 \leq c \leq 0.5$, and $0 < \alpha < 2$); $Li_aNi_bCo_cL^1_dG_eO_2$(where $0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ (where $0.90 \leq a \leq 1.8$ and $0.001 \leq b \leq 0.1$); $Li_aCoG_bO_2$ (where $0.90 \leq a \leq 1.8$ and $0.001 \leq b \leq 0.1$); $Li_aMn_{1-b}G_bO_2$ (where $0.90 \leq a \leq 1.8$ and $0.001 \leq b \leq 0.1$); $Li_aMn_2G_bO_4$ (where $0.90 \leq a \leq 1.8$ and $0.001 \leq b \leq 0.1$); $Li_aMn_{1-g}G_gPO_4$ (where $0.90 \leq a \leq 1.8$ and $0 \leq g \leq 0.5$); $Li_{(3-f)}Fe_2(PO_4)_3$ (where $0 \leq f \leq 2$); and $Li_aFePO_4$ (where $0.90 \leq a \leq 1.8$).

In the foregoing chemical formulae, A may be nickel (Ni), cobalt (Co), manganese (Mn), and/or a (e.g., any suitable) combination thereof, X may be aluminum (Al), Ni, Co, Mn, chromium (Cr), iron (Fe), magnesium (Mg), strontium (Sr), vanadium (V), a rare-earth element, and/or a (e.g., any suitable) combination thereof, D may be oxygen (O), fluorine (F), sulfur (S), phosphorus (P), and/or a (e.g., any suitable) combination thereof, G may be Al, Cr, Mn, Fe, Mg, lanthanum (La), cerium (Ce), Sr, V, and/or a (e.g., any suitable) combination thereof, and $L^1$ may be Mn, Al, and/or a (e.g., any suitable) combination thereof.

For example, the positive electrode active material may be a high-nickel-based positive electrode active material having a nickel amount of equal to or greater than about 80 mol%, equal to or greater than about 85 mol%, equal to or greater than about 90 mol%, equal to or greater than about 91 mol%, or equal to or greater than about 94 mol% and equal to or less than about 99 mol% relative to (e.g., based on) 100 mol% of metal devoid of lithium in the lithium transition metal composite oxide. The high-nickel-based positive electrode active material may achieve or provide high capacity (e.g., electrical capacity) and thus may be applied to a high-capacity (e.g., high electrical capacity) and high-density rechargeable lithium battery.

**Negative Electrode 20**

The negative electrode 20 for a rechargeable lithium battery may include a current collector COL2 and a negative electrode active material layer AML2 on the current collector COL2. The negative electrode active material layer AML2 may include a negative electrode active material and may further include a binder and/or a conductive (e.g., electrically conductive) material (e.g., an electron conductor) .

For example, the negative electrode active material layer AML2 may include a negative electrode active material of about 90 wt% to about 99 wt%, a binder of about 0.5 wt% to about 5 wt%, and a conductive (e.g., electrically conductive) material (e.g., an electron conductor) of about 0 wt% to about 5 wt%.

The binder may act or serve to improve or enhance attachment of negative electrode active material particles to each other and also to improve or enhance attachment of the negative electrode active material to the current collector COL2. The binder may include a non-aqueous (e.g., water-insoluble) binder, an aqueous (e.g., water-soluble) binder, a dry binder, and/or a (e.g., any suitable) combination thereof.

The non-aqueous (e.g., water-insoluble) binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamide imide, polyimide, and/or a (e.g., any suitable) combination thereof.

The aqueous (e.g., water-soluble) binder may include a styrene-butadiene rubber, a (meth)acrylated styrene-butadiene rubber, a (meth)acrylonitrile-butadiene rubber, a (meth)acrylic rubber, a butyl rubber, a fluoro elastomer, polyethylene oxide, polyvinyl pyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenolic resin, an epoxy resin, polyvinyl alcohol, and/or a (e.g., any suitable) combination thereof.

If (e.g., when) an aqueous (e.g., water-soluble) binder is used as the negative electrode binder, a cellulose-based compound capable of providing or increasing viscosity may further be included. The cellulose-based compound may include one or more selected from among carboxymethyl cellulose, hydroxypropyl methylcellulose, methyl cellulose, and alkali metal salts thereof. The alkali metal may include sodium (Na), potassium (K), and/or lithium (Li).

The dry binder may include a fibrillizable polymer material, for example, polytetrafluoroethylene, polyvinylidene fluoride, a polyvinylidene fluoride-hexafluoropropylene copolymer, polyethylene oxide, and/or a (e.g., any suitable) combination thereof.

The conductive (e.g., electrically conductive) material may be used to provide an electrode with conductivity (e.g., electrical conductivity), and any suitable conductive (e.g., electrically conductive) material that does not cause a chemical change (e.g., an undesirable chemical change) in a rechargeable lithium battery may be used as the conductive (e.g., electrically conductive) material. For example, the conductive (e.g., electrically conductive) material may include a carbon-based material, such as natural graphite, artificial graphite, carbon black, acetylene black, Ketjen black, carbon fiber, carbon nano-fiber, and/or carbon nano-tube; a metal powder and/or a metal fiber including one or more selected from among copper, nickel, aluminum, and silver; a conductive (e.g., electrically conductive) polymer, such as polyphenylene and/or a polyphenylene derivative; and/or a (e.g., any suitable) mixture thereof.

The current collector COL2 may include a copper foil, a nickel foil, a stainless-steel foil, a titanium foil, a nickel foam, a copper foam, a polymer substrate coated with a conductive (e.g., electrically conductive) metal, and/or a (e.g., any suitable) combination thereof.

## Negative Electrode Active Material

The negative electrode active material in the negative electrode active material layer AML2 may include a material that may reversibly intercalate and deintercalate lithium ions, lithium metal, a lithium metal alloy, a material that may dope and de-dope lithium, and/or transition metal oxide.

The material that may reversibly intercalate and deintercalate lithium ions may include a carbon-based negative electrode active material, for example, crystalline carbon, amorphous (e.g., non-crystalline) carbon, and/or a (e.g., any suitable) combination thereof. For example, the crystalline carbon may include graphite, such as non-shaped, sheet-shaped (e.g., substantially sheet-shaped), flake-shaped (e.g., substantially flake-shaped), sphere-shaped (e.g., substantially sphere-shaped), or fiber-shaped (e.g., substantially fiber-shaped) natural and/or artificial graphite, and the amorphous (e.g., non-crystalline) carbon may include soft carbon, hard carbon, mesophase pitch carbon, and/or calcined coke.

The lithium metal alloy may include an alloy of lithium and metal that is selected from among Na, K, rubidium (Rb), cesium (Cs), francium (Fr), beryllium (Be), Mg, calcium (Ca), Sr, silicon (Si), antimony (Sb), lead (Pb), indium (In), zinc (Zn), barium (Ba), radium (Ra), germanium (Ge), Al, and tin (Sn).

The material that may dope and de-dope lithium may include a Si-based negative electrode active material and/or a Sn-based negative electrode active material. The Si-based negative electrode active material may include silicon, silicon-carbon composite, $SiO_x$ (where $0 < x \leq 2$), Si-Q alloy (where Q may be alkali metal, alkaline earth metal, Group 13 element, Group 14 element (except for Si), Group 15 element, Group 16 element, transition metal, a rare-earth element, and/or a (e.g., any suitable) combination thereof), and/or a (e.g., any suitable) combination thereof. The Sn-based negative electrode active material may include Sn, $SnO_x$ (where $0 < x \leq 2$; e.g., $SnO_2$), a Sn-based alloy, a (e.g., any suitable) combination thereof.

The silicon-carbon composite may be a composite of silicon and amorphous (e.g., non-crystalline) carbon. According to one or more embodiments, the silicon-carbon composite may have a structure in which the amorphous (e.g.,

non-crystalline) carbon is coated on a surface of the silicon particle. For example, the silicon-carbon composite may include a secondary particle (core) in which primary silicon particles are assembled and an amorphous (e.g., non-crystalline) carbon coating layer (shell) on a surface of the secondary particle. The amorphous (e.g., non-crystalline) carbon may also be between the primary silicon particles, and for example, the primary silicon particles may be coated with the amorphous (e.g., non-crystalline) carbon. The secondary particles may be present dispersed in an amorphous (e.g., non-crystalline) carbon matrix.

The silicon-carbon composite may further include crystalline carbon. For example, the silicon-carbon composite may include a core including crystalline carbon and silicon particles and may also include an amorphous (e.g., non-crystalline) carbon coating layer on a surface of the core.

The Si-based negative electrode active material and/or the Sn-based negative electrode active material may be used in combination with a carbon-based negative electrode active material.

### Separator 30

Based on the type or kind of the rechargeable lithium battery, the separator 30 may be between the positive electrode 10 and the negative electrode 20. The separator 30 may include one or more selected from among polyethylene, polypropylene, and polyvinylidene fluoride, and may have a multi-layered separator thereof, such as a polyethylene/-polypropylene bi-layered separator, a polyethylene/polypropylene/polyethylene tri-layered separator, and a polypropylene/polyethylene/polypropylene tri-layered separator.

The separator 30 may include a porous substrate and a coating layer on one surface or both surfaces (e.g., two opposite (opposite facing) surfaces) of the porous substrate, which the coating layer may include an organic material, an inorganic material, and/or a (e.g., any suitable) combination thereof.

The porous substrate may be a polymer layer including one selected from among polyolefin, such as polyethylene and polypropylene, polyester, such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, a cyclic olefin copolymer, polyphenylenesulphide, polyethylene naphthalate, glass fiber, and polytetrafluoroethylene (e.g., Teflon™), or may be a copolymer or (e.g., any suitable) mixture including two or more of the materials as described in one or more embodiments.

The organic material may include a polyvinylidenefluoride-based copolymer and/or a (meth)acrylic copolymer.

The inorganic material may include an inorganic particle selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, Boehmite, and/or a (e.g., any suitable) combination thereof, but embodiments of the present disclosure are not limited thereto.

The organic material and the inorganic material may be present mixed in one coating layer or may be present as a stack of a coating layer including the organic material and a coating layer including an inorganic material.

### Electrolyte ELL

The electrolyte ELL for the rechargeable lithium battery may include a non-aqueous (e.g., water-insoluble) organic solvent and a lithium salt.

The non-aqueous (e.g., water-insoluble) organic solvent may act or serve as a medium to transmit ions that participate in an electrochemical reaction of the rechargeable lithium battery.

The non-aqueous (e.g., water-insoluble) organic solvent may include a carbonate-based solvent, an ester-based solvent, an ether-based solvent, a ketone-based solvent, an alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), and/or butylene carbonate (BC).

The ester-based solvent may include methyl acetate, ethyl acetate, n-propyl acetate, dimethyl acetate, methyl propionate, ethyl propionate, decanolide, mevalonolactone, valerolactone, and/or caprolactone.

The ether-based solvent may include dibutyl ether, tetraglyme, diglyme, dimethoxyethane, 2-methyltetrahydrofuran, 2,5-dimethyltetrahydrofuran, and/or tetrahydrofuran. The ketone-based solvent may include cyclohexanone. The alcohol-based solvent may include ethyl alcohol and/or isopropyl alcohol. The aprotic solvent may include nitriles, such as R-CN (where R may be a hydrocarbon group having a C2 to C20 linear, branched, or cyclic structure and may include a double bond, an aromatic ring, and/or an ether group); amides, such as dimethylformamide; dioxolanes, such as 1,3-dioxolane and/or 1.4-dioxolane; and/or sulfolanes.

The non-aqueous (e.g., water-insoluble) organic solvent may be used alone or in a mixture of two or more substances.

In one or more embodiments, if (e.g., when) a carbonate-based solvent is used, a cyclic carbonate and a chain

carbonate may be mixed and used, and the cyclic carbonate and the chain carbonate may be mixed in a volume ratio of about 1:1 to about 1:9.

The lithium salt may be a material that is dissolved in the non-aqueous (e.g., water-insoluble) organic solvent to act or serve as a supply source of lithium ions in a rechargeable lithium battery and plays a role in enabling a basic operation of a rechargeable lithium battery and in promoting the movement of lithium ions between the positive electrode and the negative electrode. The lithium salt may include, for example, at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (where x and y may be integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato)borate (LiBOB)

The following description will describe an electrolyte for a rechargeable lithium battery according to one or more embodiments of the present disclosure in more detail.

An electrolyte for a rechargeable lithium battery according to one or more embodiments may include a non-aqueous (e.g., water-insoluble) organic solvent, a lithium salt, a first additive represented by Chemical Formula 1, and a second additive represented by Chemical Formula 2.

In one or more embodiments, the non-aqueous (e.g., water-insoluble) organic solvent may be a mixed solvent of ethylene carbonate (EC), ethyl methyl carbonate (EMC), and dimethyl carbonate (DMC). For example, the ethylene carbonate (EC) may be included in an amount of about 10 vol% to about 30 vol% relative to (e.g., based on) the total volume of the non-aqueous (e.g., water-insoluble) organic solvent. The ethyl methyl carbonate (EMC) solvent may be included in an amount of about 20 vol% to about 70 vol% relative to (e.g., based on) the total volume of the non-aqueous (e.g., water-insoluble) organic solvent. The dimethyl carbonate (DMC) may be included in an amount of about 20 vol% to about 70 vol% relative to (e.g., based on) the total volume of the non-aqueous (e.g., water-insoluble) organic solvent.

The ethylene carbonate (EC), ethyl methyl carbonate (EMC), and dimethyl carbonate (DMC) may have a volume ratio of 1:a:b, The "a" may be about 1 to about 3, and the "b" may be about 1 to about 3. If (e.g., when) the volume ratio falls within the foregoing range, an electrolyte including the first additive and the second additive may have excellent or suitable solubility in the non-aqueous (e.g., water-insoluble) organic solvent. Preferably ethylene carbonate (EC), ethyl methyl carbonate (EMC), and dimethyl carbonate (DMC) may have a volume ratio of 1:2:2 (EC:EMC:DMC).

The lithium salt may include at least one selected from among $LiPF_6$, $LiBF_4$, $LiSbF_6$, $LiAsF_6$, $LiClO_4$, $LiAlO_2$, LiAlCl4, $LiPO_2F_2$, LiCl, LiI, $LiN(SO_3C_2F_5)_2$, $Li(FSO_2)_2N$, lithium bis(fluorosulfonyl)imide (LiFSI), and $LiC_4F_9SO_3$. In one or more embodiments, the lithium salt may include $LiPF_6$.

The lithium salt may have a concentration of about 0.1 *M* to about 2.0 *M*. For example, the lithium salt may have a concentration of equal to or greater than about 0.5 *M* or equal to or greater than about 1.0 *M*. The lithium salt may have a concentration of equal to or less than about 2.0 *M*, equal to or less than about 1.7 *M*, or equal to or less than about 1.5 *M*. For example, the lithium salt may have a concentration of about 1.15 *M*. If (e.g., when) the lithium salt has a concentration within the foregoing ranges, the electrolyte may appropriately or suitably maintain its conductivity (e.g., electrical conductivity) and viscosity.

**First Additive**

The first additive according to one or more embodiments of the present disclosure may be represented by Chemical Formula 1.

Chemical Formula 1

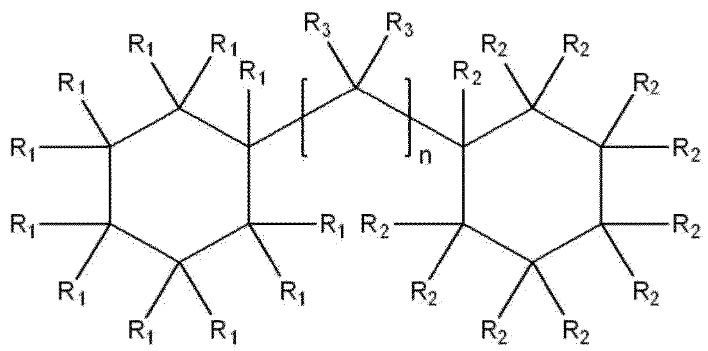

In Chemical Formula 1,

$R_1$ is each independently identical or different and is each independently hydrogen, halogen, a C1 to C10 alkyl group, or an isocyanate group. At least one of $R_1$ may be an isocyanate group. Preferably, $R_1$ may each be independently selected from hydrogen, halogen, a C1 to C3 alkyl group and an isocyanate group, wherein at least one of $R_1$ is an isocyanate group. The at least one isocyanate group $R_1$ may be preferably positioned in para position or meta position of the cyclohexyl ring.

$R_2$ is each independently identical or different and is each independently hydrogen, halogen, a C1 to C10 alkyl group, or an isocyanate group. At least one of $R_2$ is an isocyanate group. Preferably, $R_2$ may each be independently selected from hydrogen, halogen, a C1 to C3 alkyl group and an isocyanate group, wherein at least one of $R_2$ is an isocyanate group. The at least one isocyanate group $R_2$ may be preferably positioned in para position or meta position of the cyclohexyl ring.

$R_3$ is each independently identical or different and each is independently hydrogen or a cyclohexyl isocyanate residue. In other words, $R_3$ is independently selected from hydrogen or a cyclohexyl isocyanate residue. Preferably at least one $R_3$

The subscript n is an integer of 1 to 10, preferably an integer of 1 to 3.

In one or more embodiments, the first additive may be represented by Chemical Formula 1-1.

Chemical Formula 1-1

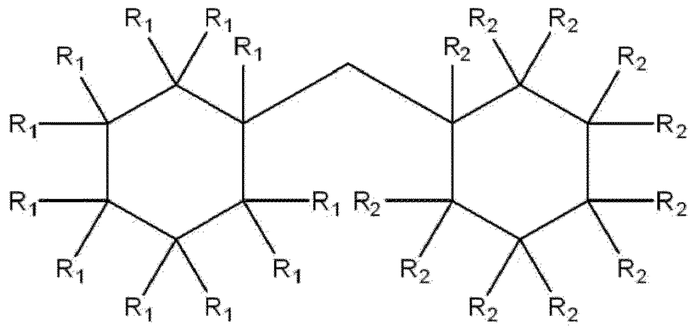

In Chemical Formula 1-1, $R_1$ may each independently be identical or different and may each independently be hydrogen, halogen, a C1 to C10 alkyl group, or an isocyanate group. At least one of $R_1$ may be an isocyanate group. Preferably, $R_1$ may each be independently selected from hydrogen, halogen, a C1 to C3 alkyl group and an isocyanate group, wherein at least one of $R_1$ is an isocyanate group. The at least one isocyanate group $R_1$ may be preferably positioned in para position or meta position of the cyclohexyl ring.

$R_2$ may each independently be identical or different and may each independently be hydrogen, halogen, a C1 to C10 alkyl group, or an isocyanate group. At least one of $R_2$ may be an isocyanate group. Preferably, $R_2$ may each be independently selected from hydrogen, halogen, a C1 to C3 alkyl group and an isocyanate group, wherein at least one of $R_2$ is an isocyanate group. The at least one isocyanate group $R_2$ may be preferably positioned in para position or meta position of the cyclohexyl ring.

$R_1$ and $R_2$ in Chemical Formula 1 and Chemical Formula 1-1 may be selected to form a symmetrically substituted additive.

In one or more embodiments, the first additive may be represented by Chemical Formula 1-2.

Chemical Formula 1-2

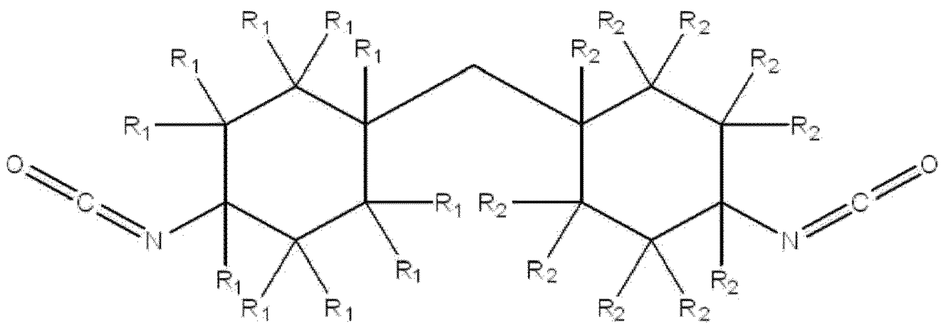

In Chemical Formula 1-2,

$R_1$ may each independently be identical or different and may each independently be hydrogen, halogen, or a C1 to C10

alkyl group. Preferably, $R_1$ may each be independently selected from hydrogen, halogen, a C1 to C3 alkyl group and an isocyanate group. More preferred $R_1$ may each be independently selected from hydrogen and a C1 to C3 alkyl group.

$R_2$ may each independently be identical or different and may each independently be hydrogen, halogen, or a C1 to C10 alkyl group. Preferably, $R_2$ may each be independently selected from hydrogen, halogen, a C1 to C3 alkyl group and an isocyanate group, wherein at least one of $R_2$ is an isocyanate group. More preferred $R_2$ may each be independently selected from hydrogen and a C1 to C3 alkyl group.

In one or more embodiments, the first additive may be represented by Chemical Formula 1A:

Chemical Formula 1A

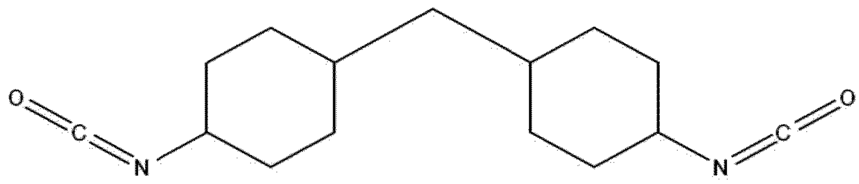

Although a positive electrode active material (e.g., lithium-transition metal oxide) has a stable structure, transition metal ions may be eluted during charge/discharge procedures and high-temperature storage, and side reactions may occur between the transition metal ions and moisture. Thus, there may occur cell performance degradation, such as increase in internal resistance at high-temperature storage and charge/discharge cycle characteristics.

An electrolyte, to which the first additive is applied, for a rechargeable lithium battery electrolyte may control moisture to effectively or suitably suppress transition metal ions from being eluted from a positive electrode and being precipitated on a surface of a negative electrode (or to effectively or suitably reduce a degree or occurrence of elution of transition metal ions from a positive electrode and of precipitation of transition metal ions on a surface of a negative electrode). Accordingly, cell performance degradation during charge/discharge procedures and high-temperature storage may be effectively or suitably prevented (or a degree or occurrence of such cell performance degradation may be reduced).

The first additive may be included in an amount of about 0.01 wt% to about 3 wt% relative to the total weight (e.g., based on 100 wt% of a total amount) of the electrolyte. For example, the first additive may be included in an amount of equal to or greater than about 0.1 wt%, equal to or greater than about 0.5 wt%, or equal to or greater than about 1 wt% relative to the total weight (e.g., based on 100 wt% of a total amount) of the electrolyte. The first additive may be included in an amount of equal to or less than about 2 wt% or equal to or less than about 1.5 wt% relative to the total weight (e.g., based on 100 wt% of a total amount) of the electrolyte. In one or more embodiments, the first additive may be included in an amount of about 0.1 wt% to about 1 wt% relative to the total weight (e.g., based on 100 wt% of a total amount) of the electrolyte. If (e.g., when) the first additive is included in an amount of less than about 0.01 wt% relative to the total weight (e.g., based on 100 wt% of a total amount) of the electrolyte, there may be a slight effect of solving an issue caused by transition metal ions eluted from the positive electrode. If (e.g., when) the first additive is included in an amount of greater than about 3 wt% relative to the total weight (e.g., based on 100 wt% of a total amount) of the electrolyte, a reduction in cycle life characteristics during a charge/discharge cycle may occur. For example, if (e.g., when) the first additive is included in an amount less than about 0.01 wt%, there may be substantially no effect on solving the issue caused by transition metal ions eluted from the positive electrode, and if (e.g., when) the first additive is included in an amount greater than about 3 wt%, a reduction in cycle life characteristics during a charge/discharge cycle may occur.

## Second Additive

The second additive according to one or more embodiments of the present disclosure may be represented by Chemical Formula 2.

Chemical Formula 2

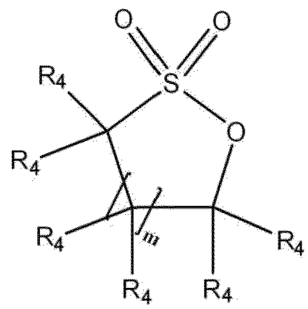

In Chemical Formula 2,

$R_4$ is each independently identical or different and is each independently hydrogen, halogen, a substituted or unsubstituted C1 to C20 alkyl group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C3 to C20 cycloalkenyl group, a substituted or unsubstituted C3 to C20 cycloalkynyl group, a substituted or unsubstituted C6 to C30 aryl group, or a substituted or unsubstituted C2 to C30 heterocyclic group.

The subscript m may be an integer of 0 to 4, preferably 1 to 4.

Preferably, in Chemical Formula 2, $R_4$ may be independently selected from hydrogen, halogen, an unsubstituted C1 to C3 alkyl group, an unsubstituted C3 to C4 alkenyl group, an unsubstituted C3 to C6 cycloalkyl group and an unsubstituted C6 aryl group, and the subscript m may be an integer of 1 to 4, most preferably 1 to 3.

The second additive may include at least one cyclic sulfonate-based compound. For example, $R_4$ in Chemical Formula 2 may be hydrogen. The second additive may be a compound represented by Chemical Formula 2-1 or Chemical Formula 2-2. For example, the second additive may be 1,4-butane sultone or 1,3-propane sultone.

The second additive according to one or more embodiments of the present disclosure may include at least one selected from among Chemical Formula 2A and Chemical Formula 2B.

Chemical Formula 2A

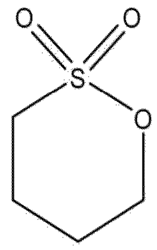

Chemical Formula 2B

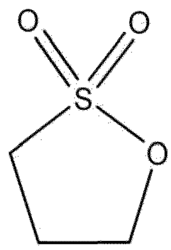

The second additive may form a film on a surface of the positive electrode to prevent an oxidation reaction of the electrolyte and decomposition of the surface of the positive electrode under a high-temperature environment (or to reduce a degree or occurrence of an oxidation reaction of the electrolyte and decomposition of the surface of the positive electrode under a high-temperature environment). For example, a lone pair of electrons of a sulfonate group may act on Lewis acid (e.g., $PF_5^-$) in the electrolyte to stabilize the Lewis acid. In one or more embodiments, the unshared electron pair may also stabilize transition metal on or released from the surface of the positive electrode. This may prevent a deterioration of the

positive electrode (or reduce a degree or occurrence of a deterioration of the positive electrode) to improve or enhance cycle life characteristics of the rechargeable lithium battery.

The second additive may be included in an amount of about 0.01 wt% to about 5 wt% relative to the total weight (e.g., based on 100 wt% of a total amount) of the electrolyte. For example, the second additive may be included in an amount of equal to or greater than about 0.1 wt%, equal to or greater than about 0.5 wt%, or equal to or greater than about 1 wt% relative to the total weight (e.g., based on 100 wt% of a total amount) of the electrolyte. The second additive may be included in an amount of equal to or less than about 3 wt% or equal to or less than about 2 wt% relative to the total weight (e.g., based on 100 wt% of a total amount) of the electrolyte. In one or more embodiments, the second additive may be included in an amount of about 0.5 wt% to about 1.5 wt% relative to the total weight (e.g., based on 100 wt% of a total amount) of the electrolyte. In a preferred embodiment, the second additive may be included in an amount of 0.5 wt% to 1.5 wt% relative to the total weight of the electrolyte and the first additive may be included in an amount of 0.5 wt% to 1.5 wt% relative to the total weight of the electrolyte. In a further preferred embodiment, the second additive may be included in an amount of 0.5 wt% to 1.5 wt% relative to the total weight of the electrolyte and the first additive may be included in an amount of 0.5 wt% relative to the total weight (e.g., based on 100 wt% of a total amount) of the electrolyte. If (e.g., when) the second additive is included in an amount of less than about 0.01 wt% relative to the total weight (e.g., based on 100 wt% of a total amount) of the electrolyte, it may be difficult to suppress gas generation (or reduce a degree or occurrence of gas generation) in the rechargeable lithium battery. If (e.g., when) the second additive is included in an amount of greater than about 5 wt% relative to the total weight (e.g., based on 100 wt% of a total amount) of the electrolyte, the rechargeable lithium battery initial charge/discharge efficiency and cycle life performance may be reduced in accordance with an increase in usage amount. For example, if the second additive is included in an amount less than about 0.01 wt%, it may be difficult to suppress gas generation in the rechargeable lithium battery, and if the second additive is included in an amount greater than about 5 wt%, the initial charge/discharge efficiency and cycle life performance may be reduced.

If (e.g., when) the second additive is used in combination with the first additive, a synergy effect may occur. For example, a more rigid film may be formed on the surfaces of the positive electrode and/or the negative electrode if (e.g., when) the first additive and the second additive are used in combination than if (e.g., when) each of the first additive and the second additive is used alone. As a result, suppression of resistance increase and rechargeable lithium battery internal gas generation at a high-temperature environment (or reduction of a degree or occurrence of resistance increase and rechargeable lithium battery internal gas generation at a high-temperature environment) and cycle life characteristics at room temperature may be improved or enhanced.

According to one or more embodiments, the first additive and the second additive may be included in a weight ratio of about 5:1 to about 1:3. For example, the first additive and the second additive may be in a weight ratio of about 2:1 to about 1:3. In one or more embodiments, the first additive and the second additive may be in a weight ratio of about 1:1 to about 1:3. If (e.g., when) the first additive and the second additive are in a weight ratio within the foregoing ranges, it may achieve a rechargeable lithium battery with effective or suitable suppression of gas generation (or suitable reduction of a degree or occurrence of gas generation) if (e.g., when) left at high temperatures, improved or enhanced cycle life characteristics at room temperature, excellent or suitable suppression of rechargeable lithium battery internal resistance at high temperatures, and enhanced storage characteristics at high temperatures. For example, if (e.g., when) the first additive and the second additive are present in a weight ratio within the foregoing ranges, it may achieve or provide a rechargeable lithium battery with effective suppression of gas generation at high temperatures, improved or enhanced cycle life characteristics at room temperature, excellent or suitable suppression of internal resistance at high temperatures, and enhanced storage characteristics at high temperatures.

### Rechargeable Lithium Battery

Based on the shape of a rechargeable lithium battery, the rechargeable lithium battery may be classified into cylindrical, prismatic, pouch, and coin types or kinds. FIGS. 2-5 are simplified diagrams illustrating a rechargeable lithium battery according to one or more embodiments, with FIG. 2 illustrating a cylindrical rechargeable lithium battery, FIG. 3 illustrating a prismatic rechargeable lithium battery, and FIGS. 4 and 5 illustrating pouch-type or kind rechargeable lithium batteries. Referring to FIGS. 2-4, a rechargeable lithium battery 100 may include an electrode assembly 40 in which a separator 30 is between a positive electrode 10 and a negative electrode 20, and may also include a casing 50 in which the electrode assembly 40 is provided. The positive electrode 10, the negative electrode 20, and the separator 30 may be impregnated in/with an electrolyte. The rechargeable lithium battery 100 may include a sealing member 60 that seals the casing 50 as illustrated in FIG. 2. In one or more embodiments, as illustrated in FIG. 3, the rechargeable lithium battery 100 may include a positive electrode lead tab 11, a positive electrode terminal 12, a negative electrode lead tab 21, and a negative electrode terminal 22. As illustrated in FIGS. 4 and 5, the rechargeable lithium battery 100 may include an electrode tab 70, or a positive electrode tab 71 and a negative electrode tab 72, which electrode tab 70 may act or serve as an electrical path for externally inducing a current generated in the electrode assembly 40.

A rechargeable lithium battery according to one or more embodiments of the present disclosure may include a

positive electrode including a positive electrode active material, a negative electrode including a negative electrode active material, and the electrolyte for the rechargeable lithium battery as described in one or more embodiments.

The positive electrode active material may include, for example, cobalt-free nickel-manganese-based oxide represented by Chemical Formula 3.

Chemical Formula 3 $Li_aNi_xMn_yM^1_zO_{2-b}X_b$

In Chemical Formula 3, a, x, y, and z may satisfy the relationship of $0.9 \le a \le 1.8$, $0.8 \le x < 1$, $0 < y \le 0.2$, $0 \le z \le 0.2$, $0.9 \le x+y+z \le 1.1$, and $0 \le b \le 0.1$. $M^1$ may be one or more elements selected from among Al, boron (B), Ba, Ca, Ce, Cr, Fe, Mg, molybdenum (Mo), niobium (Nb), Si, Sn, Sr, titanium (Ti), V, tungsten (W), and zirconium (Zr). X may be one or more elements selected from among F, P, and S.

The electrolyte according to one or more embodiments of the present disclosure may significantly improve or enhance the cell performance (e.g., by reducing a degree or occurrence of degradation) of the rechargeable lithium battery in which cobalt-free nickel-manganese-based oxide represented by Chemical Formula 3 is applied as the positive electrode active material.

The negative electrode active material may be a carbon-based negative electrode active material, a Si-based negative electrode active material, a Sn-based negative electrode active material, and/or a (e.g., any suitable) combination thereof.

In one or more embodiments, the negative electrode active material may be a silicon-carbon composite containing graphite and silicon nano-particles.

The rechargeable lithium battery according to one or more embodiments of the present disclosure may operate at a high voltage of equal to or greater than about 4.35 V. For example, the rechargeable lithium battery may operate in a range of about 4.4 V to about 4.5 V.

The rechargeable lithium battery according to one or more embodiments of the present disclosure may be applied to automotive vehicles, mobile phones, and/or any other electrical devices, but embodiments of the present disclosure are not limited thereto.

Hereinafter, embodiments of the present disclosure will be described in more detail with reference to Embodiments and Comparatives. However, the following examples are only examples of the present disclosure, and embodiments of the present disclosure are not limited to the following examples.

## Embodiments and Comparatives

An electrolyte and a rechargeable lithium battery were fabricated by the following method.

## Embodiment 1

(1) Preparation of Electrolyte

About 1.15 M $LiPF_6$ was dissolved in a non-aqueous organic solvent including ethylene carbonate (EC), ethyl methyl carbonate (EMC), and dimethyl carbonate (DMC) mixed in a volume ratio of 20:40:40 (EC:EMC:DMC, 1:2:2), and 0.5 wt% of a first additive and 0.5 wt% of a second additive were added to prepare an electrolyte.

A substance represented by Chemical Formula 1A was used as the first additive, and a substance represented by Chemical Formula 2A was used as the second additive.

Chemical Formula 1A

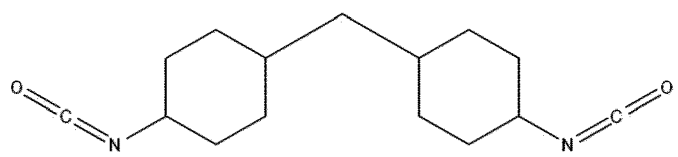

Chemical Formula 2A

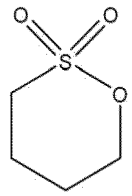

(2) Fabrication of Rechargeable Lithium Battery

$LiNi_{0.91}Mn_{0.09}O_2$ as a positive electrode active material, polyvinylidene fluoride as a binder, and carbon black as a conductive (e.g., electrically conductive) material were mixed in a weight ratio of 97:2:1, and the mixture was dispersed in N-methyl pyrrolidone to prepare a positive electrode active material slurry.

The positive electrode active material slurry was coated on an Al current collector of 15 μm in thickness, dried at 100 °C, and then pressed to manufacture a positive electrode.

Artificial graphite and silicon nano-particles mixed in a weight ratio of 93:7 as a negative electrode active material, a styrene-butadiene rubber (SBR) as a binder, and carboxymethyl cellulose (CMC) as a thickener were mixed in a weight ratio of 97:1:2, and the mixture was dispersed in distilled water to prepare a negative electrode active material slurry.

The negative electrode active material slurry was coated on a Cu current collector of 10 μm in thickness, dried at 100 °C, and then pressed to manufacture a negative electrode.

The positive electrode, the negative electrode, and a polyethylene separator of 25 μm in thickness were assembled to manufacture an electrode assembly, and the electrolyte was introduced to fabricate a rechargeable lithium battery.

**Embodiment 2**

An electrolyte and a rechargeable lithium battery were each fabricated in substantially the same method as that in Embodiment 1, except that a second additive represented by Chemical Formula 2A was added in an amount of 1 wt% when the electrolyte was prepared.

**Embodiment 3**

An electrolyte and a rechargeable lithium battery were each fabricated in substantially the same method as that in Embodiment 1, except that a second additive represented by Chemical Formula 2A was added in an amount of 1.5 wt% when the electrolyte was prepared.

**Comparative 1**

An electrolyte and a rechargeable lithium battery were each fabricated in substantially the same method as that in Embodiment 1, except that neither the first additive represented by Chemical Formula 1A nor the second additive represented by Chemical Formula 2A was added when the electrolyte was prepared.

**Comparative 2**

An electrolyte and a rechargeable lithium battery were each fabricated in substantially the same method as that in Embodiment 1, except that a first additive represented by Chemical Formula 1A was not added when the electrolyte was prepared.

**Comparative 3**

An electrolyte and a rechargeable lithium battery were each fabricated in substantially the same method as that in Embodiment 1, except that a first additive represented by Chemical Formula 4 was added in an amount of 0.5 wt% and a second additive represented by Chemical Formula 2A was added in an amount of 0.5 wt% when the electrolyte was prepared.

Chemical Formula 4

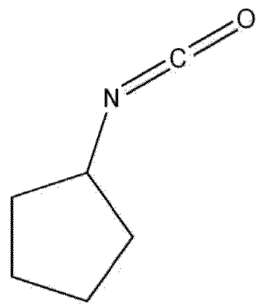

**Comparative 4**

An electrolyte and a rechargeable lithium battery were each fabricated in substantially the same method as that in Embodiment 1, except that a first additive represented by Chemical Formula 1A was added in an amount of 5 wt% when the electrolyte was prepared.

Table 1 illustrates compositions of Embodiments 1 to 3 and Comparatives 1 to 4.

Table 1

| | First additive | | Second additive | |
|---|---|---|---|---|
| | Type | Amount (wt%) | Type | Amount (wt%) |
| Embodiment 1 | Chemical Formula 1A | 0.5 | Chemical Formula 2A | 0.5 |
| Embodiment 2 | Chemical Formula 1A | 0.5 | Chemical Formula 2A | 1 |
| Embodiment 3 | Chemical Formula 1A | 0.5 | Chemical Formula 2A | 1.5 |
| Comparative 1 | - | - | - | - |
| Comparative 2 | - | - | Chemical Formula 2A | 0.5 |
| Comparative 3 | Chemical Formula 4 | 0.5 | Chemical Formula 2A | 0.5 |
| Comparative 4 | Chemical Formula 1A | 5 | Chemical Formula 2A | 0.5 |

**Evaluation 1: High-Temperature Storage Characteristics**

For each of the rechargeable lithium batteries according to Embodiments 1 to 3 and Comparatives 1 to 4, after initial direct-current internal resistance (initial DCIR) was measured as $\Delta V/\Delta I$ (voltage change/current change), the battery was allowed to charge its maximum energy state into a full charge state (SOC 100%) and stored in the charged state at a high temperature (60 °C) for 30 days, and then direct-current resistance was measured to calculate a DCIR increase rate (%) according to Equation 1 and the result is listed in Table 2.

Equation 1

$$\text{DCIR increase rate (\%)} = (\text{DCIR after 30 days / initial DCIR}) \times 100$$

Table 2

| | Initial DCIR (mΩ) | DCIR after high-temperature (60 °C) storage (mΩ) | DCIR increase rate (%) |
|---|---|---|---|
| Embodiment 1 | 41.1 | 44.2 | 107.54% |
| Embodiment 2 | 42.4 | 45.8 | 108.02% |
| Embodiment 3 | 43.5 | 47.1 | 108.28% |
| Comparative 1 | 44.2 | 48.9 | 110.63% |

(continued)

| | Initial DCIR (mΩ) | DCIR after high-temperature (60 °C) storage (mΩ) | DCIR increase rate (%) |
|---|---|---|---|
| Comparative 2 | 45.3 | 50.2 | 110.82% |
| Comparative 3 | 46.2 | 50.2 | 108.66% |
| Comparative 4 | 49.1 | 53.7 | 109.37% |

Referring to Table 2, it may be observed that the DCIR increase rate after rest for 30 days at a high temperature is less in the rechargeable lithium batteries according to Embodiments 1 to 3 than in the rechargeable lithium batteries according to Comparatives 1 to 4. For example, it may be observed that there is a reduction in suppression of resistance increase when the electrolyte outside the amount range of the first additive is used (Comparative 4). Accordingly, it may be ascertained that a combination of the first additive and the second additive causes an improvement in high-temperature storage of the rechargeable lithium battery.

### Evaluation 2: Room-Temperature Cycle Life Characteristics

Each of the rechargeable lithium batteries according to Embodiments 1 to 3 and Comparatives 1 to 4 was charged and discharged once at 0.2 C to measure a charge/discharge capacity (initial discharge capacity).

Then, each of the rechargeable lithium batteries was charged and discharged at room temperature (25 °C) with a voltage range of 2.75 V to 4.25 V at a 0.5 C-rate for 200 cycles, and a change in discharge capacity was measured.

Each of the rechargeable lithium batteries was recharged to 4.2 V at 0.2 C under the condition of constant current, 0.05 C Cut-off, and constant voltage, and discharged to 3.0 V at 0.2 C under the condition of constant current to thereby measure a discharge capacity. The charge and discharge characteristics at this time were called recovery characteristics. Herein, charge and discharge capacities were measured to calculate a ratio of the discharge capacity to the initial capacity, and the result is shown as a capacity recovery rate (%) in Table 3.

Table 3

| | 25 °C, 200 cycles |
|---|---|
| | Capacity recovery rate (%) |
| Embodiment 1 | 98.4 |
| Embodiment 2 | 97.4 |
| Embodiment 3 | 96.9 |
| Comparative 1 | 95.2 |
| Comparative 2 | 95.4 |
| Comparative 3 | 95.7 |
| Comparative 4 | 94.1 |

Referring to Table 3, it may be observed that the rechargeable lithium batteries according to Embodiments 1 to 3 exhibit room-temperature charge/discharge cycle characteristics superior to those of the rechargeable lithium batteries according to Comparatives 1 to 4. For example, it may be observed that there is a reduction in room-temperature cycle characteristics when the electrolyte outside the amount range of the first additive is used (Comparative 4). Therefore, it may be ascertained that, as both of the first additive and the second additive are included according to one or more embodiments of the present disclosure, improved room-temperature cycle characteristics are achieved.

### Evaluation 3: Gas Generation after High-Temperature Storage

Each of the rechargeable lithium batteries fabricated in Embodiments 1 to 3 and Comparatives 1 to 4 was stored at 60 °C for 1 day, 7 days, and then refinery gas analysis (RGA) was utilized to measure a gas generation amount *(mL)*. The result is listed in Table 4.

Table 4

| | Gas generation amount after high-temperature (60 °C) storage | | |
|---|---|---|---|
| | First day *(mL)* | Seventh day *(mL)* | Increase rate (%) |
| Embodiment 1 | 1.61 | 1.91 | 119% |
| Embodiment 2 | 1.72 | 2.05 | 119% |
| Embodiment 3 | 1.79 | 2.15 | 120% |
| Comparative 1 | 1.85 | 2.31 | 125% |
| Comparative 2 | 1.91 | 2.4 | 126% |
| Comparative 3 | 2.01 | 2.52 | 125% |
| Comparative 4 | 2.12 | 2.59 | 122% |

Referring to Table 4, it may be observed that the rechargeable lithium batteries according to Embodiments 1 to 3 have reduced gas generation amount even after high-temperature storage and decreased increase rate than those of the rechargeable lithium batteries according to Comparatives 1 to 4. For example, it may be observed that, different from the rechargeable lithium battery according to Comparative 3 in which chemical stability is reduced due to high reduction potential and low oxidation potential even when an isocyanate group is included, the rechargeable lithium batteries according to one or more embodiments of the present disclosure stably control moisture to effectively or suitably suppress the gas generation. In one or more embodiments, it may be observed that there is a reduction in suppression of gas generation when the electrolyte outside the amount range of the first additive is used (Comparative 4). According to one or more embodiments of the present disclosure, the rechargeable lithium battery may improve in swelling characteristics.

In one or more embodiments, it may be ascertained that the aforementioned excellent effects may not be achieved if (e.g., when) any of the composition of the additive according to the present disclosure is not included, if (e.g., when) a compound of the composition of the additive is replaced with a different compound, or if (e.g., when) the composition of the additive falls outside a set or predetermined range.

According to one or more embodiments of the present disclosure, it may be possible to achieve a rechargeable lithium battery with excellent or suitable room-temperature cycle life characteristics, effective suppression of resistance increase and internal gas generation at high-temperature storage, and improved or enhanced battery stability.

A person of ordinary skill in the art, in view of the present disclosure in its entirety, would appreciate that each suitable feature of the one or more embodiments of the present disclosure may be combined or combined with each other, partially or entirely, and may be technically interlocked and operated in one or more suitable ways, and each embodiment may be implemented independently of each other or in conjunction with each other in any suitable manner unless otherwise stated or implied.

While the subject matter of the present disclosure has been described in connection with what is presently considered to be practical embodiments, it is to be understood that the present disclosure is not limited to the disclosed embodiments. In contrast, it is intended to cover one or more suitable modifications and equivalent arrangements included within the scope of the appended claims and equivalents thereof. It therefore will be understood that one or more embodiments described above are just illustrative but not limitative in all aspects.

## Claims

**1.** An electrolyte for a rechargeable lithium battery, comprising:

a non-aqueous organic solvent;
a lithium salt;
a first additive represented by Chemical Formula 1; and
a second additive represented by Chemical Formula 2,

Chemical Formula 1

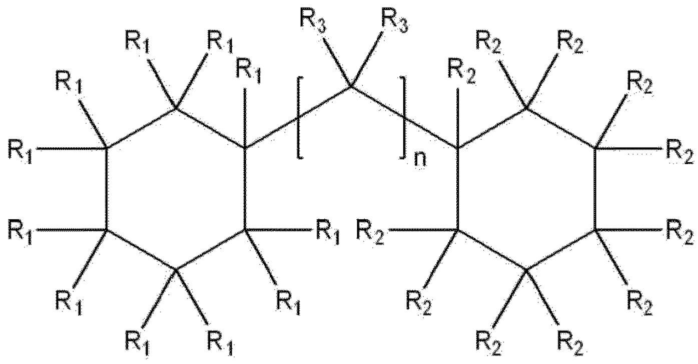

,

wherein, in Chemical Formula 1,
$R_1$ are each independently identical or different and are each independently hydrogen, halogen, a C1 to C10 alkyl group, or an isocyanate group, wherein at least one of $R_1$ is an isocyanate group,
$R_2$ are each independently identical or different and are each independently hydrogen, halogen, a C1 to C10 alkyl group, or an isocyanate group, wherein at least one of $R_2$ is an isocyanate group,
$R_3$ are each independently identical or different and are each independently hydrogen or a cyclohexyl isocyanate residue, and
n is an integer of 1 to 10,

Chemical Formula 2

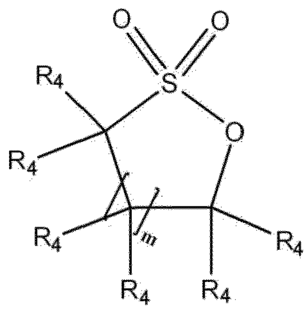

,

wherein, in Chemical Formula 2,
$R_4$ are each independently identical or different and are each independently hydrogen, halogen, a substituted or unsubstituted C1 to C20 alkyl group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C3 to C20 cycloalkenyl group, a substituted or unsubstituted C3 to C20 cycloalkynyl group, a substituted or unsubstituted C6 to C30 aryl group, or a substituted or unsubstituted C2 to C30 heterocyclic group, and
m is an integer of 1 to 4,
wherein the term "substituted" refers to that at least one hydrogen is substituted by deuterium, a halogen group, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, C1 to C20 alkoxy group, a C1 to C10 fluoroalkyl group, or a cyano group.

**2.** The electrolyte as claimed in claim 1, wherein the first additive is represented by Chemical Formula 1-1,

Chemical Formula 1-1

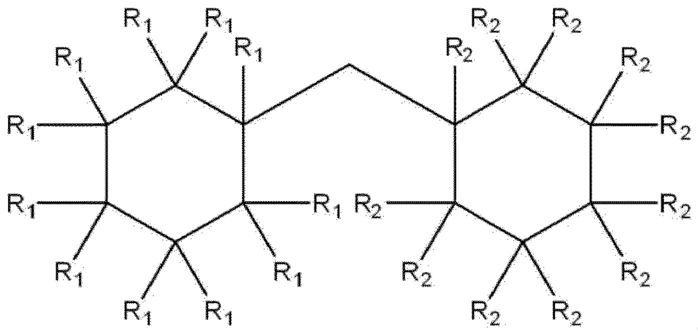

,

and

wherein, in Chemical Formula 1-1,
$R_1$ are each independently identical or different and are each independently hydrogen, halogen, a C1 to C10 alkyl group, or an isocyanate group, wherein at least one of $R_1$ is an isocyanate group, and
$R_2$ are each independently identical or different and are each independently hydrogen, halogen, a C1 to C10 alkyl group, or an isocyanate group, wherein at least one of $R_2$ is an isocyanate group.

**3.** The electrolyte as claimed in claim 1, wherein the first additive is represented by Chemical Formula 1-2,

Chemical Formula 1-2

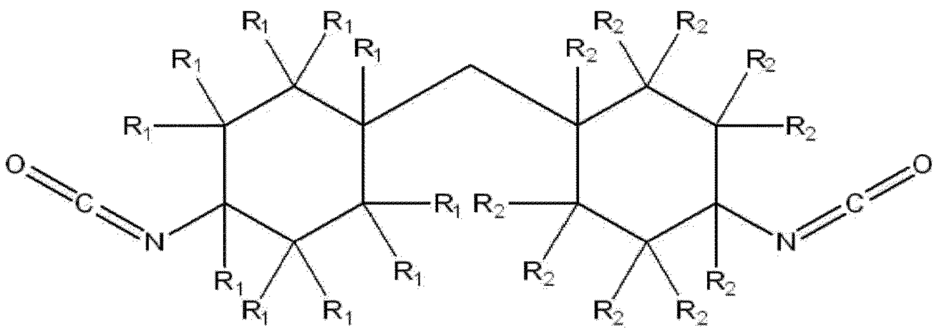

,

and

wherein, in Chemical Formula 1-2,
$R_1$ are each independently identical or different and are each independently hydrogen, halogen, or a C1 to C10 alkyl group, and
$R_2$ are each independently identical or different and are each independently hydrogen, halogen, or a C1 to C10 alkyl group.

**4.** The electrolyte as claimed in any one of claims 1 to 3, wherein each $R_4$ in Chemical Formula 2 is hydrogen.

**5.** The electrolyte as claimed in any one of the preceding claims, wherein the second additive comprises at least one selected from among compounds represented by Chemical Formula 2A and Chemical Formula 2B,

Chemical Formula 2A

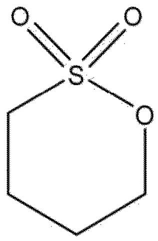

,

and

Chemical Formula 2B

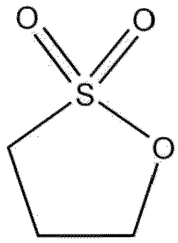

.

**6.** The electrolyte as claimed in any one of the preceding claims, wherein the first additive is in an amount of 0.01 wt% to 3 wt% based on 100 wt% of a total amount of the electrolyte for the rechargeable lithium battery.

**7.** The electrolyte as claimed in claim 6, wherein the first additive is in an amount of 0.1 wt% to 1 wt% based on 100 wt% of a total amount of the electrolyte for the rechargeable lithium battery.

**8.** The electrolyte as claimed in any one of the preceding claims, wherein the second additive is in an amount of 0.01 wt% to 5 wt% based on 100 wt% of a total amount of the electrolyte for the rechargeable lithium battery.

**9.** The electrolyte as claimed in claim 8, wherein the second additive is in an amount of 0.5 wt% to 1.5 wt% based on 100 wt% of a total amount of the electrolyte for the rechargeable lithium battery.

**10.** The electrolyte as claimed in any one of the preceding claims, wherein the first additive and the second additive are in a weight ratio of 5:1 to 1:3.

**11.** The electrolyte as claimed in any one of the preceding claims, wherein the non-aqueous organic solvent comprises a carbonate-based solvent, and
the carbonate-based solvent comprises ethylene carbonate (EC), ethyl methyl carbonate (EMC), and dimethyl carbonate (DMC).

**12.** The electrolyte as claimed in claim 11, wherein the ethylene carbonate (EC), ethyl methyl carbonate (EMC), and dimethyl carbonate (DMC) have a volume ratio of 1:a:b,

wherein a is 1 to 3, and
wherein b is 1 to 3.

**13.** A rechargeable lithium battery, comprising:

a positive electrode comprising a positive electrode active material;
a negative electrode comprising a negative electrode active material; and
the electrolyte for the rechargeable lithium battery as claimed in any one of the preceding claims.

**14.** The rechargeable lithium battery as claimed in claim 13, wherein the positive electrode active material comprises

cobalt-free nickel-manganese-based oxide.

**15.** The rechargeable lithium battery as claimed in one of claims 13 or 14, wherein the rechargeable lithium battery is configured to operate at a high voltage of equal to or greater than 4.35 V.

FIG. 1

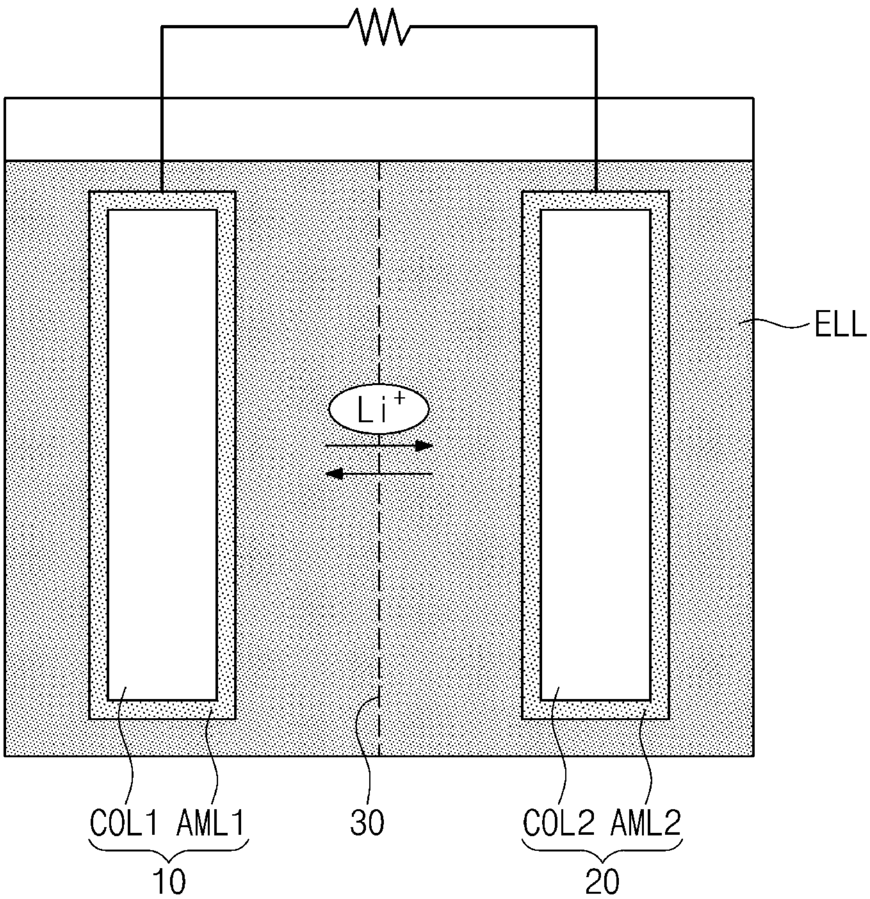

FIG. 2

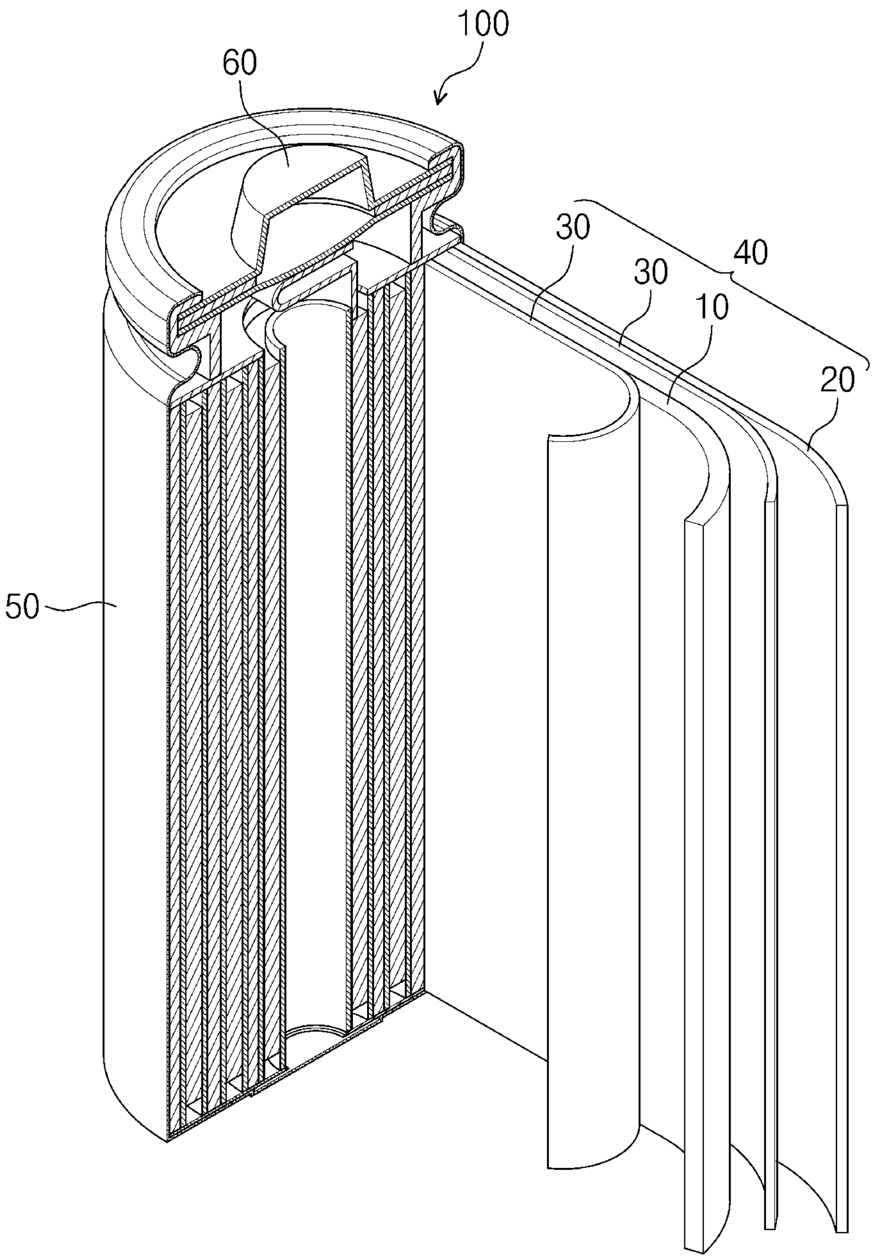

FIG. 3

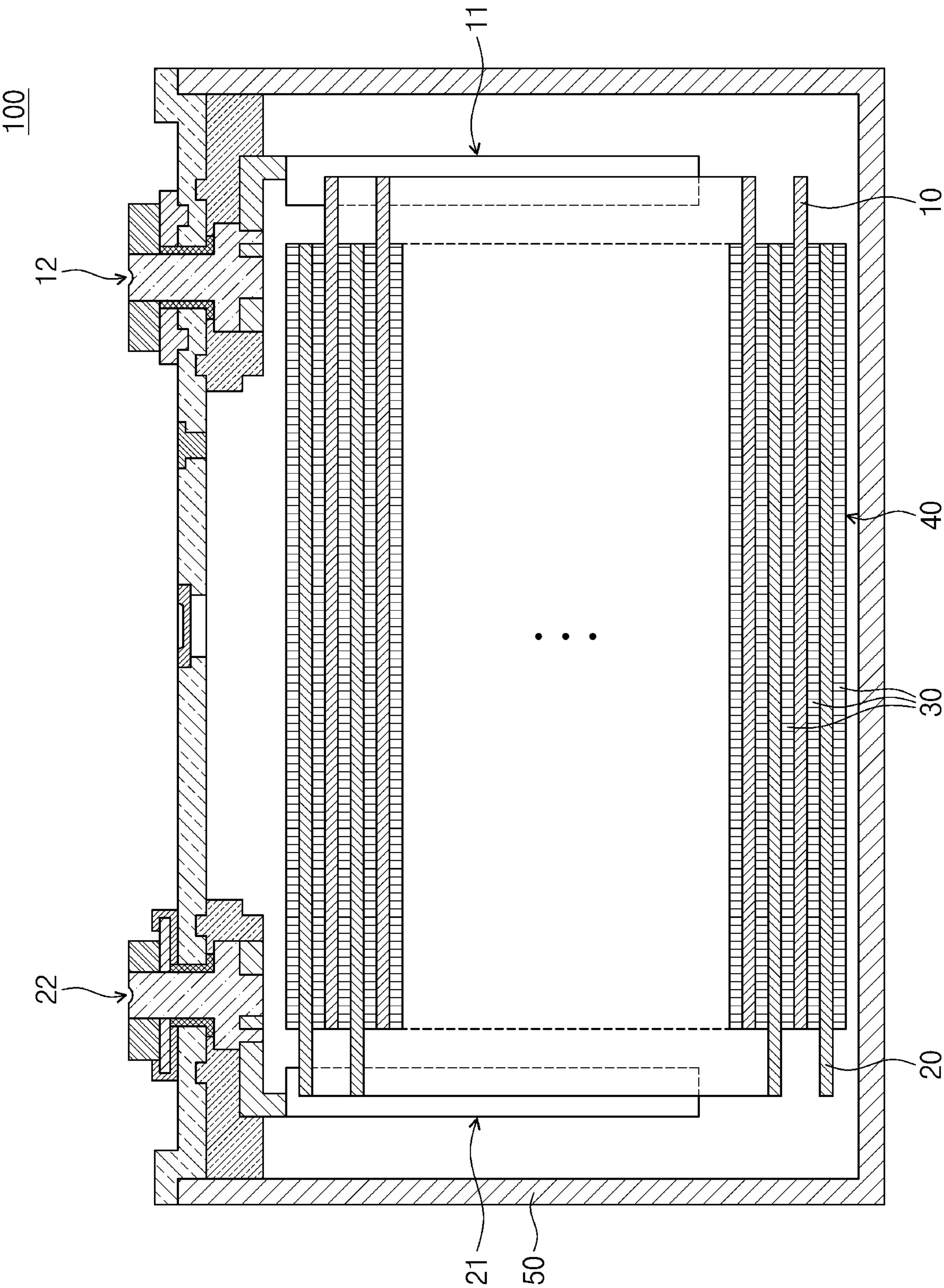

FIG. 4

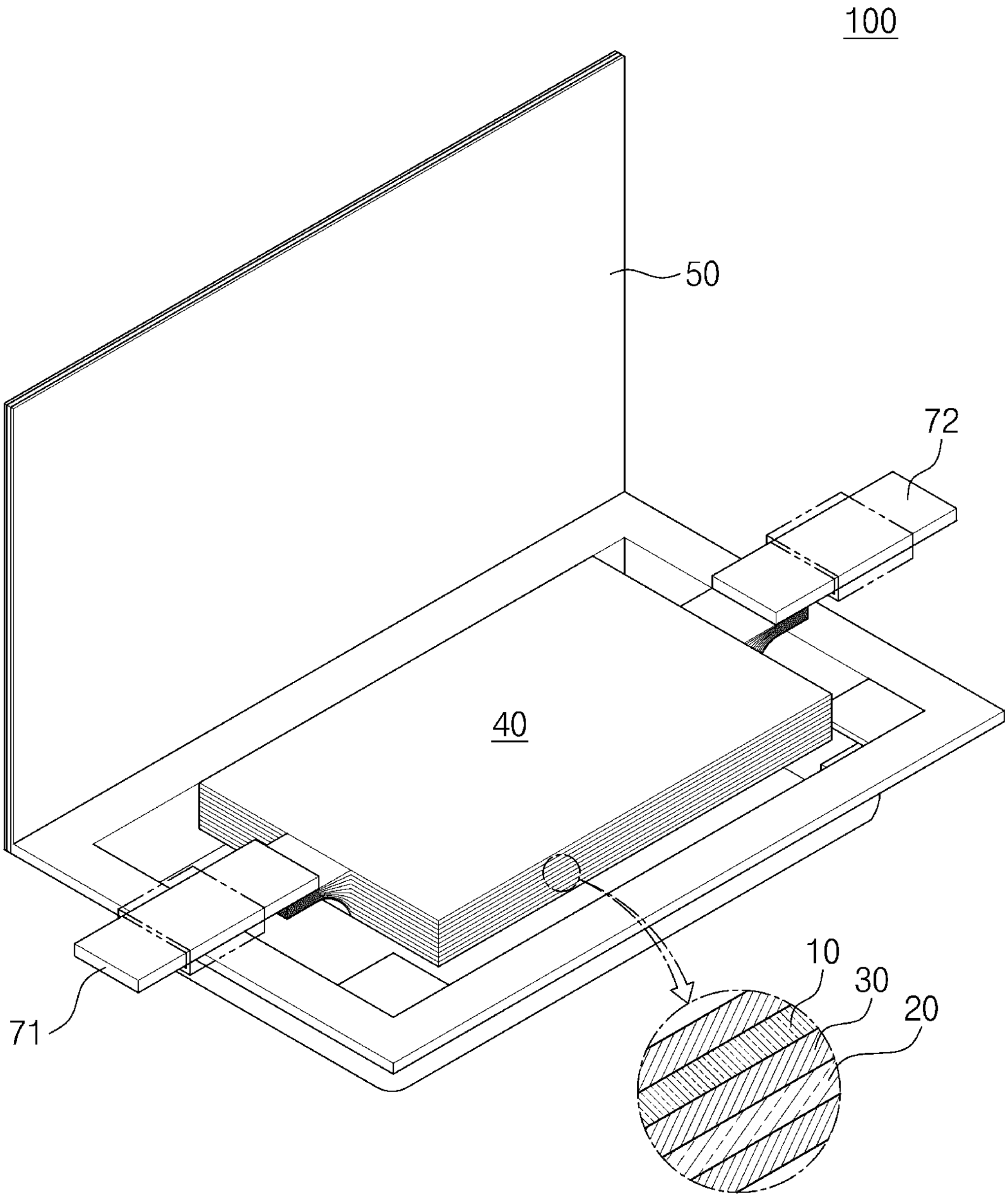

FIG. 5

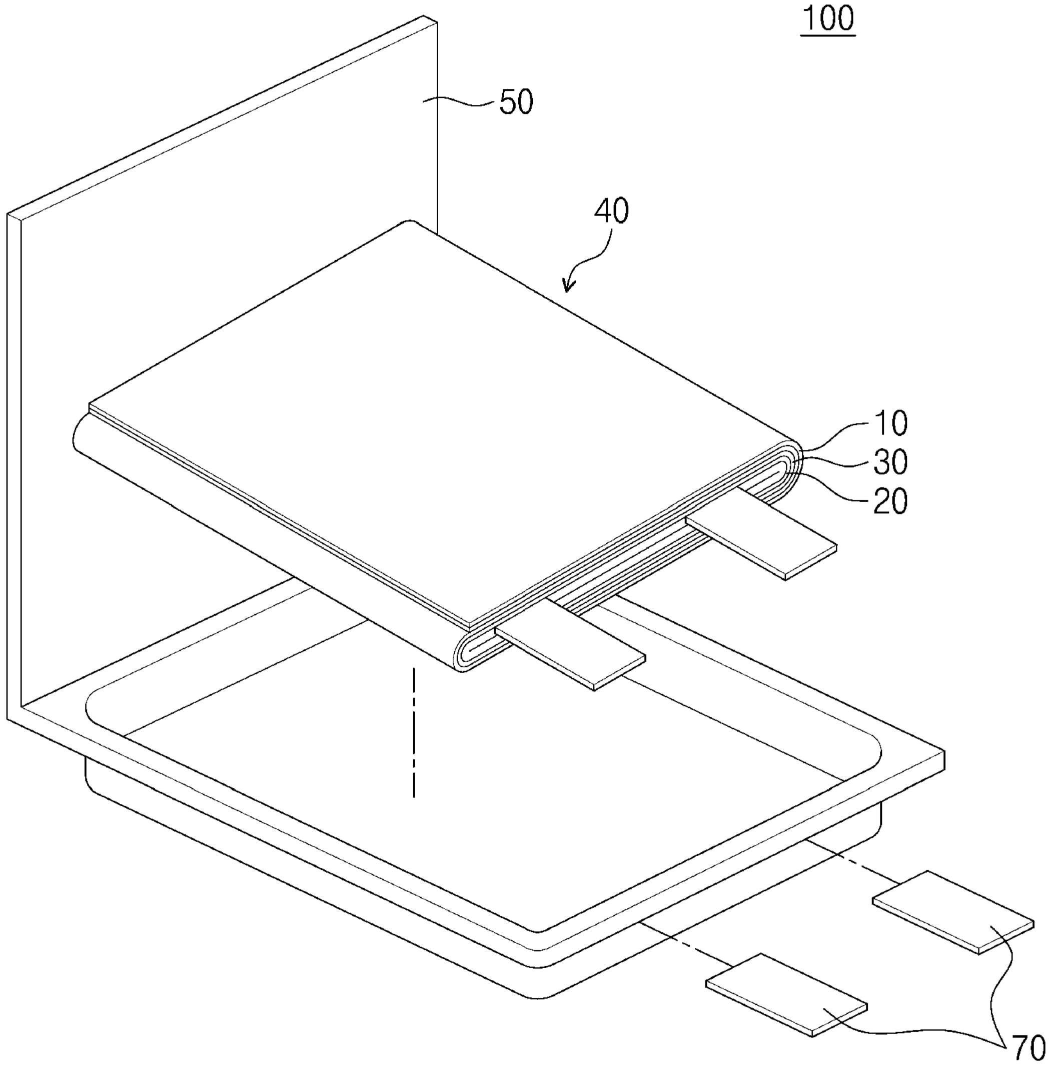

Europäisches Patentamt
European Patent Office
Office européen des brevets

# EUROPEAN SEARCH REPORT

Application Number
EP 25 18 5121

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 672 561 A1 (MITSUBISHI CHEM CORP [JP]) 11 December 2013 (2013-12-11) * paragraphs [0011], [0048], [0053], [0324] - [0328], [0333], [0345]; claims 1, 8, 10, 13; table 3 * | 1-15 | INV. H01M10/0525 H01M10/0567 H01M10/0569 |
| X | JP 5 962028 B2 (MITSUBISHI CHEM CORP) 3 August 2016 (2016-08-03) * paragraphs [0026], [0032], [0155] - [0158], [0161]; table 1 * | 1-15 | |

TECHNICAL FIELDS SEARCHED (IPC)
H01M

The present search report has been drawn up for all claims

1

| Place of search | Date of completion of the search | Examiner |
|---|---|---|
| The Hague | 14 January 2026 | Scarfiello, Canio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 25 18 5121

This annex lists the patent family members relating to the patent documents cited in the above-mentioned European search report. The members are as contained in the European Patent Office EDP file on
The European Patent Office is in no way liable for these particulars which are merely given for the purpose of information.

14-01-2026

| Patent document cited in search report | | Publication date | Patent family member(s) | | Publication date |
|---|---|---|---|---|---|
| EP 2672561 | A1 | 11-12-2013 | CN 103339784 | A | 02-10-2013 |
| | | | CN 103811815 | A | 21-05-2014 |
| | | | CN 109148953 | A | 04-01-2019 |
| | | | EP 2672561 | A1 | 11-12-2013 |
| | | | KR 20140036148 | A | 25-03-2014 |
| | | | KR 20140040284 | A | 02-04-2014 |
| | | | US 2013316229 | A1 | 28-11-2013 |
| | | | WO 2012105404 | A1 | 09-08-2012 |
| JP 5962028 | B2 | 03-08-2016 | JP 5962028 | B2 | 03-08-2016 |
| | | | JP 2012178339 | A | 13-09-2012 |

EPO FORM P0459

For more details about this annex : see Official Journal of the European Patent Office, No. 12/82